# EUROPÄISCHE PATENTSCHRIFT

(11) **EP 3 275 845 B1**
(45) Veröffentlichungstag und Bekanntmachung des Hinweises auf die Patenterteilung: **15.05.2019**
(21) Anmeldenummer: 17182341.2
(22) Anmeldetag: 20.07.2017
(51) Int. Cl.: C02F 11/06, C02F 11/12, C02F 101/16, B01D 53/58, B01D 53/56

(54) **VERFAHREN ZUR VERBRENNUNG EINES KLÄRSCHLAMMS**
METHOD FOR SEWAGE SLUDGE COMBUSTION
PROCÉDÉ DE COMBUSTION DE BOUE D'ÉPURATION

(30) Priorität: 25.07.2016 DE 102016213582
(43) Veröffentlichungstag der Anmeldung: 31.01.2018
(73) Patentinhaber: MaXXcon Energie GmbH & Co. KG, 33332 Gütersloh (DE)
(72) Erfinder: WAGNER, Reinhard, 33330 Gütersloh (DE)
(74) Vertreter: Maikowski & Ninnemann Patentanwälte Partnerschaft mbB

(56) Entgegenhaltungen:
- EP-A1- 0 304 783
- CN-A- 103 848 550
- DE-C1- 19 954 764
- DE-C2- 4 103 463

## Beschreibung

Die vorliegende Erfindung betrifft ein Verfahren zur Verbrennung eines Klärschlamms gemäß dem Oberbegriff des Anspruchs 1.

Bei der Trocknung von Schlämmen, insbesondere bei der Trocknung von Klärschlamm oder Industrieschlamm, entstehen Brüden, die zahlreiche organische Verbindungen enthalten. Unter anderem ist in diesem Brüden Ammoniak (häufig in der Form von Ammonium) enthalten. Derartige ammoniakhaltige Brüden, die aus einer Klärschlammtrocknung stammen, werden bei den aus dem Stand der Technik bekannten Verfahren häufig in eine Kläranlage entsorgt oder kondensiert und über einen Biofilter in die Umgebung abgeführt. Es ist auch bekannt, Brüden nachzubehandeln, um eine Zersetzung der in den Brüden enthaltenen organischen Substanzen zu erreichen.

Letztlich dienen die gemäß dem Stand der Technik durchgeführten Verfahren einem Unschädlichmachen der in den Brüden enthaltenen Substanzen und erfordern dabei stets einen erheblichen Aufbereitungsaufwand der Brüden. Dieser Aufbereitungsaufwand ist auch mit einem finanziellen Aufwand verbunden, sodass die Entsorgung der bei der Schlammtrocknung entstehenden Brüden das gesamte Schlammentsorgungsverfahren verteuert.

Aus dem Patent DE 41 03 463 C2 ist ein Verfahren zum Verbrennen von Klärschlamm bekannt, bei dem aus den bei der Verbrennung entstehenden Trocknungsbrüden Ammoniak abgetrennt wird. Dazu ist es erforderlich, die Brüden zunächst zu kondensieren und zu konzentrieren, um Ammoniakwasser zu gewinnen. Dieses wird dann in einen Rauchgasstrom eingedüst.

Aus der DE 39 10 215 A1 ist ein Verfahren zur Verwertung von Klärschlamm bekannt, bei dem ausschließlich das Rauchgas aus einem Verbrennungsprozess fossiler Brennstoffe mit Brüden, die bei der Klärschlammtrocknung angefallen sind, behandelt wird. Dabei kann getrockneter Klärschlamm zusammen mit den fossilen Brennstoffen verbrannt werden.

Aus dem europäischen Patent EP 0 266 417 B1 ist ein Verfahren zur Reinigung von gasförmigen Verbrennungsprodukten durch Reduzierung ihres Stickoxidgehalts bekannt, bei dem Ammoniak aus externen Quellen in eine Hochtemperatur-Zyklonabscheidervorrichtung eingebracht wird.

Der vorliegenden Erfindung liegt die Aufgabe zugrunde, ein gegenüber den aus dem Stand der Technik bekannten Verfahren verbessertes Verfahren zur Verbrennung eines Klärschlamms bereitzustellen.

Diese Aufgabe wird durch ein Verfahren mit den nachfolgend erläuterten Schritten gelöst. Zunächst wird der Schlamm getrocknet. Anschließend wird der Schlamm verbrannt. Dabei werden ammoniakhaltige und dampfförmige Brüden, die beim Trocknen des Schlamms entstehen, in ein Rauchgas geleitet, welches beim Verbrennen des Schlamms entsteht.

Das Rauchgas enthält üblicherweise unterschiedliche Anteile an Stickoxiden, die aus dem Rauchgas (chemisch) entfernt werden müssen. Hierzu wird bei aus dem Stand der Technik bekannten Verfahren häufig Ammoniak aus externen Quellen eingesetzt.

Das erfindungsgemäße Verfahren zeichnet sich zunächst dadurch aus, dass das Verbrennen des Schlamms autotherm als Wirbelschichtverbrennung in einem Verbrennungsaggregat durchgeführt wird. Das heißt, der Schlamm wird ohne externe Energiezufuhr verbrannt. Die für die Verbrennung erforderliche Energie wird aus dem Schlamm selbst gewonnen. Lediglich zur Initiierung des Verbrennungsprozesses wird eine externe Energiequelle zur Bereitstellung der erforderlichen Aktivierungsenergie benötigt. Diese autotherme Schlammverbrennung lässt sich besonders vorteilhaft dadurch realisieren, dass die ammoniakhaltigen Brüden einerseits in das Rauchgas und andererseits zusätzlich in eine Wirbelschicht in dem Verbrennungsaggregat eingeleitet werden. Durch die Einleitung der ammoniakhaltigen Brüden in das Rauchgas erfolgt eine effiziente Reduzierung der Stickoxide in dem Rauchgas. Dabei sind der Anteil der ammoniakhaltigen Brüden, der in das Rauchgas geleitet wird, und der Anteil der ammoniakhaltigen Brüden, der in das Verbrennungsaggregat bzw. die Wirbelschicht geleitet wird, variabel einstellbar. Das heißt, diese Anteile, die auch als Brüdenteilströme bezeichnet werden können, können an die jeweiligen Betriebsbedingungen bzw. Erfordernisse angepasst werden. Dann können auch hochbelastete Brüdendämpfe aus dem Trocknungsprozess besonders vorteilhaft vollständig verwertet werden.

Dabei ist zu berücksichtigen, dass die ammoniakhaltigen Brüden einen hohen Stickstoffgehalt aufweisen und insoweit auch als stickstoffhaltige Brüden bezeichnet werden können. Durch eine Einleitung der ammoniakhaltigen Brüden in die Wirbelschicht entsteht zunächst ein erhöhter Anteil an Stickoxiden. Durch das zusätzliche Einleiten der ammoniakhaltigen Brüden in das Rauchgas wird dieser Stickoxidgehalt jedoch wieder reduziert. Durch das Einleiten der ammoniakhaltigen Brüden sowohl in die Wirbelschicht als auch in das Rauchgas werden die ammoniakhaltigen Brüden also in zweierlei Hinsicht verwertet. Einerseits wird eine in den Brüden enthaltene thermische (und chemische) Energie in die Wirbelschicht eingebracht. Andererseits wird durch den Ammoniak oder die Ammoniakverbindungen in den ammoniakhaltigen Brüden eine äußerst wirksame Reduzierung der Stickoxide in dem Rauchgas erreicht. Diese kombinierte thermische und chemische Verwertung der ammoniakhaltigen Brüden, die beim Trocknen des Schlamms entstehen, führt zu einem besonders geringen Stickoxidanteil in dem durch den Verbrennungsprozess entstehenden Rauchgas. Folglich beruht das erfindungsgemäß beanspruchte Verfahren auf der Ausnutzung eines synergistischen Effekts, der sich durch die kombinierte thermische und chemische Verwertung der ammoniakhaltigen Brüden aus der Schlammtrocknung ergibt.

Durch die vollständige Verwertung der ammoniakhaltigen Brüden entfällt einerseits eine aufwändige Aufbereitung und Entsorgung der ammoniakhaltigen Brüden, andererseits ist zur Rauchgasentstickung kein Ammoniak aus externen Quellen notwendig, was zu zusätzlichen Kosteneinsparungen führt. Darüber hinaus reduziert sich durch die erfindungsgemäße vollständige Verwertung ammoniakhaltiger Brüden der Stickoxid- bzw. Ammoniakeintrag in die Umgebung bzw. die Stickstoffbelastung von Kläranlagen, über die die ammoniakhaltigen Brüden bislang häufig entsorgt wurden. Auch ist eine Entsorgung oder Wiederaufbereitung von Biofiltern, über die ammoniakhaltige Brüden bislang ebenfalls entsorgt wurden, nicht mehr erforderlich.

Im Ergebnis kann durch die prozessinterne vollständige Wiederverwertung der ammoniakhaltigen Brüden ein mehrfacher Gewinn für die Umwelt und den Betreiber der Schlammverbrennungsanlage erreicht werden.

Um eine vollständige Verwertung der ammoniakreichen Brüden in besonders vorteilhafter Weise zu gewährleisten, ist in einer Variante eine mehrfach (mindestens zweifach) gestufte Zugabe der ammoniakhaltigen Brüden über die axiale Höhe des Verbrennungsaggregats vorgesehen. Dabei werden der in den Brüden enthaltene Ammoniak bzw. die in den Brüden enthaltenen Ammoniakderivate aus den Brüdenteilströmen bei Zuführung in den Bereich des Wirbelbettes der Verbrennung effektiv thermisch verwertet. Die Brüdenteilströme werden dabei vorzugsweise anhand des aktuellen Bedarfs gesteuert bzw. geregelt, so dass eine optimierte thermische und chemische Verwertung der ammoniakhaltigen Brüden erreicht wird. Diese Steuerung bzw. Regelung wird weiter unten noch im Detail erläutert.

In einer Variante werden die ammoniakhaltigen Brüden vor ihrer Einleitung in die Wirbelschicht und/oder ihrer Einleitung in das Rauchgas vorgewärmt. In einer Variante sind eine Brüdenvorwärmung und optional auch eine Verbrennungsluftvorwärmung auf eine Temperatur von ca. 270 bis 350 °C, insbesondere von ca. 280 bis 340 °C, insbesondere von ca. 290 bis 330 °C und ganz besonders von ca. 300 bis 320 °C vorgesehen. Dadurch kann der autotherme Betrieb der Schlammverbrennung trotz der Zugabe hoher Wassermengen aus den Brüden besonders einfach sichergestellt werden.

In einer Variante wird zum Vorwärmen der ammoniakhaltigen Brüden bzw. zum Vorwärmen der Verbrennungsluft Dampf eingesetzt, der in einem Dampfkessel durch das bei der Verbrennung des Schlamms entstehende Rauchgas erzeugt wird.

Ammoniakhaltige Brüden entstehen insbesondere bei einer Trocknung von Klärschlamm oder Industrieschlamm. In einer Variante handelt es sich daher bei dem Schlamm, der zuerst getrocknet und anschließend verbrannt wird, um Klärschlamm oder um einen Industrieschlamm. Dabei ist der Industrieschlamm insbesondere ein Schlamm mit organischem Anteil, sodass bei seiner Trocknung ammoniakhaltige Brüden entstehen. Grundsätzlich ist jeder Schlamm, bei dessen Trocknung ammoniakhaltige Brüden entstehen, ein geeigneter Schlamm zur Durchführung des Verfahrens.

In einer Variante werden die ammoniakhaltigen Brüden mittels Unterdruck aus der Schlammtrocknung entfernt und anschließend in der Verbrennung thermisch verwertet bzw. zur Entstickung der Rauchgase eingesetzt. Dadurch reduziert sich gegenüber einer aus dem Stand der Technik bekannten Abführung der ammoniakhaltigen Brüden in eine Kläranlage zum einen die Geruchsbelastung und zum anderen die Rückbelastung der Kläranlage signifikant. Auch wenn die ammoniakhaltigen Brüden anderweitig gesammelt und zur Entstickung eingesetzt werden, kommt es zu einer signifikanten Geruchsreduzierung in der Umgebung der Schlammverwertungsanlage, da die ammoniakhaltigen Brüden nicht mehr in die Umgebung entweichen.

Der Begriff "ammoniakhaltig" im Sinne der vorliegenden Erfindung umfasst dabei neben dem Vorhandensein von Ammoniak in den Brüden auch das Vorhandensein von Ammoniakderivaten in den Brüden. Beispielsweise sind Brüden, die Ammoniumverbindungen enthalten, ammoniakhaltige Brüden im Sinne der vorliegenden Erfindung, da die entsprechenden Ammoniumverbindungen leicht in Ammoniak überführt werden können. In gleicher Weise sind harnstoffhaltige Brüden als ammoniakhaltige Brüden im Sinne der vorliegenden Erfindung zu verstehen, da auch Harnstoff durch eine Reaktion mit Wasser bzw. Wasserdampf leicht in Ammoniak und Kohlenstoffdioxid überführt werden kann.

Um für eine effiziente Entstickung des Rauchgases zu sorgen, erfolgt das Einleiten der ammoniakhaltigen Brüden in das Rauchgas in einer Verfahrensvariante bei einer Temperatur von 800 °C bis 900 °C, insbesondere von 820 °C bis 880 °C, insbesondere von 840 °C bis 860 °C.

Schlammverwertungsanlagen, wie etwa Schlamm-Monoverbrennungsanlagen, weisen häufig einen Verbrennungsofen, in dem die eigentliche Schlammverbrennung stattfindet, und einen Dampfkessel, in dem mit den aus dem Verbrennungsofen stammenden Abgasen (Rauchgasen) Dampf erzeugt wird, auf. Dazu wird die Wärme der Abgase zur Verdampfung von Wasser eingesetzt. In einer Verfahrensvariante erfolgt das Einleiten der ammoniakhaltigen Brüden, die zur Rauchgasentstickung eingesetzt werden, nicht direkt in den Verbrennungsofen (das Verbrennungsaggregat). Um eine gute Verteilung des reaktiven Ammoniaks aus den ammoniakhaltigen Brüden im Rauchgasstrom zu erreichen, ist es in einer Verfahrensvariante vorgesehen, dass die ammoniakhaltigen Brüden in einer Rauchgasleitung mit dem Rauchgas in Kontakt gebracht werden, wobei die Rauchgasleitung das Rauchgas von dem Verbrennungsofen zu dem Dampfkessel der entsprechenden Schlammverwertungsanlage führt. Wenn ein Teil der thermischen Energie des Rauchgases zur Dampferzeugung eingesetzt wurde, ist die Temperatur des Rauchgases regelmäßig zu niedrig, um eine effektive Rauchgasentstickung mittels Ammoniak aus den ammoniakhaltigen Brüden zu erreichen. Daher ist ein Einleiten der ammoniakhaltigen Brüden in das noch heiße Rauchgas bevorzugt. Mit anderen Worten ausgedrückt, werden die ammoniakhaltigen Brüden, die zur Entstickung des Rauchgases dienen, vorzugsweise nach dem Verbrennungsofen und vor dem Dampfkessel mit dem zu entstickenden Rauchgas in Kontakt gebracht.

Um das Verfahren besonders energieeffizient durchführen zu können, ist es in einer Variante vorgesehen, den Dampf, der durch eine Abkühlung des Rauchgases erzeugt wird, zumindest teilweise zur Trocknung des Schlamms einzusetzen. Auf diese Weise lässt sich eine externe Energiezufuhr zur Trocknung des Schlamms vermeiden. Die Trocknung erfolgt dann mittels der aus der Verbrennung resultierenden Abwärme, die über den erzeugten Dampf zum Trockner geführt wird.

In einer Variante wird eine Stickstoffkonzentration und/oder eine Ammoniakkonzentration im Rauchgas bestimmt, um einen ersten Anteil der ammoniakhaltigen Brüden, der der Wirbelschicht im Verbrennungsaggregat zugeführt wird, und einen zweiten Anteil der ammoniakhaltigen Brüden, der dem Rauchgas zugeführt wird, zu bestimmen. Das heißt, es erfolgt in Abhängigkeit der Stickstoffkonzentration und/oder der Ammoniakkonzentration im Rauchgas eine Steuerung bzw. Regelung der Brüdenteilströme, sodass unterschiedliche Mengen ammoniakhaltiger Brüden in die Wirbelschicht und in das Rauchgas eingebracht werden können. Diese Mengen werden dabei bedarfsabhängig bestimmt, um für eine optimale Verwertung der ammoniakhaltigen Brüden sowie einen besonders geringen Stickoxidanteil in den Rauchgasen zu erreichen.

Die Regelung einer der Aufteilung der Brüden dienenden Brüdenverteilerstation erfolgt in einer Variante mit Hilfe einer Stickoxid- und Ammoniak-Konzentrationsmessung im Rauchgas. Bei Messung eines signifikanten Ammoniakschlupfes (also einer zu hohen Ammoniakkonzentration im Rauchgas) ist das Verhältnis der Brüdenteilströme so zu regeln, dass eine größere Brüdenmenge thermisch im Wirbelbett umgesetzt wird. Daraus resultiert eine höhere Stickoxidmenge im Rauchgas, die durch Ammoniak reduziert werden kann - der Ammoniakschlupf sinkt. Im Gegensatz dazu erfordern grenzwertüberschreitende Stickoxid-Konzentrationen eine Erhöhung des zur Entstickung notwendigen ammoniakhaltigen Brüdenteilstroms.

Damit die ammoniakhaltigen Brüden nur über möglichst kurze Transportwege transportiert werden müssen, stehen die Trocknung des Schlamms und die Verbrennung des Schlamms in einem engen räumlichen und funktionalen Zusammenhang, insbesondere in derselben Schlammverwertungsanlage. Das heißt, dass insbesondere ammoniakhaltige Brüden aus dem Trocknungsprozess desjenigen Schlamms zur thermischen Verwertung und zur Rauchgasentstickung eingesetzt werden, der nachfolgend selbst in einem Verbrennungsofen der entsprechenden Schlammverwertungsanlage verbrannt wird. Zu diesem Zweck ist in einer solchen Schlammverwertungsanlage eine Verbindungsleitung zwischen einem Trockner und einer Brüdenverteilerstation, die den Brüdenstrom vom Trockner auf die Brüdenteilströme zur Eindüsung in das Verbrennungsaggregat bzw. in das Rauchgas aufteilt, vorgesehen.

Wie oben beschrieben, ist es vorteilhaft, für eine effiziente Entstickung auf einen optimalen Temperaturbereich zu achten. Dieser wird in einer Variante durch eine regelbare Verbrennungsluft- und Brüden-Vorwärmung und eine optimierte Verbrennungsführung erreicht. Die hierfür erforderliche Wärmeenergie wird beispielsweise in einem der Verbrennung nachgeschalteten Dampferzeuger zur Verfügung gestellt. Die Temperaturüberwachung kann in einer Variante durch akustische Temperaturmessungen entlang der Brüdeneindüsungen realisiert werden.

Das erfindungsgemäße Verfahren bezieht sich auf die Verbrennung eines Klärschlamms. In einer Verfahrensvariante handelt es sich bei der Schlammverwertungsanlage daher um eine Klärschlamm-Monoverbrennungsanlage. Derartige Klärschlamm-Monoverbrennungsanlagen sind an sich bereits bekannt. Nicht bekannt ist jedoch, derartige Monoverbrennungsanlagen derart zu betreiben, dass dabei die erfindungsgemäße vollständige Verwertung ammoniakhaltiger Brüden zur thermischen Verwertung und zur Entstickung von Rauchgasen erfolgt. Auf diese Weise ist es beispielsweise möglich, dass die Klärschlamm-Monoverbrennungsanlage abwasserfrei betrieben werden kann. Bei einem solchen abwasserfreien Betrieb kann standortunabhängig gearbeitet werden. Das heißt, es muss keine Kläranlage in der Nähe der Klärschlamm-Monoverbrennungsanlage angesiedelt sein, um die Klärschlamm-Monoverbrennungsanlage betreiben zu können. Sämtliche der vorgenannten Verfahrensvarianten lassen sich in beliebiger Weise miteinander kombinieren.

Weitere Details der vorliegenden Erfindung sollen anhand eines Ausführungsbeispiels und einer Figur näher erläutert werden. Es zeigt:

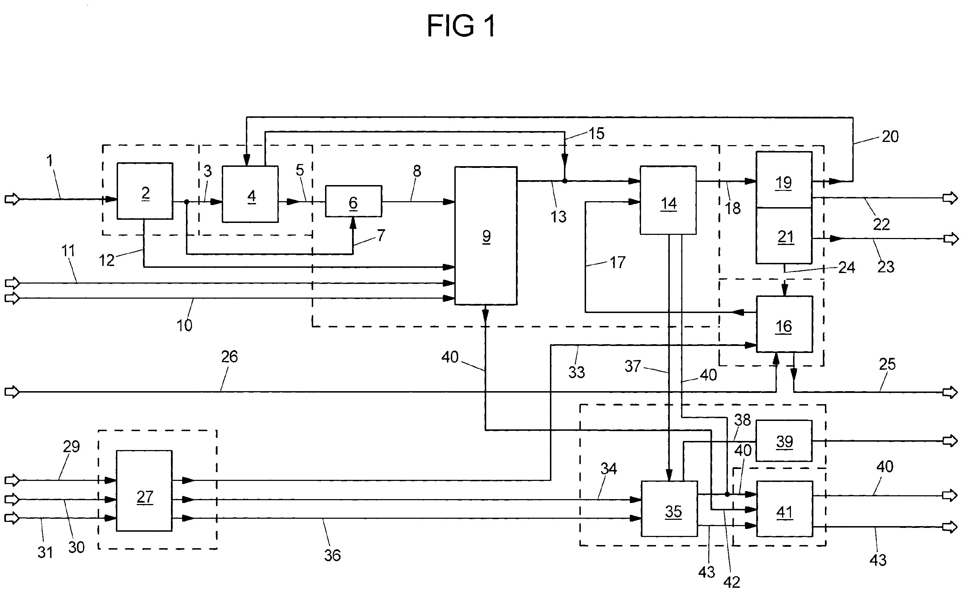

- Figur 1: ein Grundfließbild einer Klärschlamm-Monoverbrennungsanlage, bei der ammoniakhaltige Brüden teilweise thermisch verwertet und teilweise zur Rauchgasentstickung eingesetzt werden.

Die Figur 1 zeigt ein Grundfließbild einer Klärschlamm-Monoverbrennungsanlage, bei der ammoniakhaltige Brüden teilweise thermisch verwertet und teilweise zur Rauchgasentstickung eingesetzt werden. Dabei wird Klärschlamm 1, der einen Trockensubstanzanteil von etwa 25 % aufweist, in einen Schlammbunker 2 eingebracht. Aus dem Schlammbunker 2 wird die gewünschte Menge Klärschlamm über eine erste Klärschlammleitung 3 in einen Trockner 4 überführt. In dem Trockner 4 wird der Trockensubstanzanteil des Klärschlamms auf einen gewünschten Wert zwischen etwa 45 % und 80 %, beispielsweise 75 %, gebracht. Zur Trocknung wird dabei in der Klärschlamm-Monoverbrennungsanlage selbst erzeugter Dampf eingesetzt, wie später noch erläutert wird.

Der derart getrocknete Klärschlamm wird anschließend über eine zweite Klärschlammleitung 5 in einen Mischer 6 überführt. In diesem Mischer 6 wird der getrocknete Klärschlamm mit nicht getrocknetem Klärschlamm, welcher direkt aus dem Schlammbunker 2 über eine dritte Klärschlammleitung 7 in den Mischer 6 eingebracht wird, vermischt, um einen definierten Trockensubstanzanteil des Klärschlamms von etwa 45 % bis 60 %, insbesondere 55 %, einzustellen.

Das Vorsehen des Mischers 6 hat dabei den Vorteil, dass unabhängig vom Trocknungserfolg im Trockner 4 Klärschlamm mit stets genau dem gleichen und gewünschten Trockensubstanzanteil über eine vierte Klärschlammleitung 8 in einen Verbrennungsofen 9 überführt werden kann. Grundsätzlich wäre es zwar möglich, ohne einen derartigen Mischer 6 zu arbeiten, doch könnte dann der Trockensubstanzanteil des in dem Verbrennungsofen 9 zu verbrennenden Klärschlamms deutlich größeren Schwankungen in Bezug auf seinen Trockensubstanzanteil unterworfen sein.

Um für eine gute anfängliche Verbrennung des getrockneten Klärschlamms in dem Verbrennungsofen 9 zu sorgen, werden Erdgas 10, Primärluft 11 und aus dem Schlammbunker 2 stammende Sekundärluft 12 in den Verbrennungsofen eingeführt. Das Erdgas 10 wird während des Anfahrvorgangs dann zusammen mit der Primärluft 11 und der Sekundärluft 12 in dem Verbrennungsofen 9 verbrannt. Ist der Anfahrvorgang abgeschlossen, erfolgt eine autotherme Verbrennung des getrockneten Klärschlamms. Das heißt, zur weiteren Verbrennung des getrockneten Klärschlamms ist keine externe Energiezufuhr mehr erforderlich.

Teilströme der ammoniakhaltigen Brüden aus dem Trocknungsprozess werden dem Klärschlamm, der in einer Wirbelschicht gehalten wird, mehrfach gestuft zugedüst, um eine effiziente thermische Verwertung der Brüden bei der autothermen Verbrennung zu gewährleisten.

Bei der Klärschlammverbrennung entsteht Rauchgas, welches über eine erste Rauchgasleitung 13 aus dem Verbrennungsofen 9 zu einem Dampfkessel 14 geführt wird. Dabei wird ein Teilstrom der aus dem Trockner 4 stammenden Trocknerbrüden als ammoniakhaltige Brüden über eine Brüdenleitung 15 zur ersten Rauchgasleitung 13 geführt und dort mit dem Rauchgas vereinigt.

Die Trocknerbrüden enthalten Ammoniak bzw. Ammoniakderivate. Die im Rauchgas enthaltenen Stickoxide (NOₓ) werden durch diesen Ammoniak anschließend reduziert. Die Reaktionsgleichungen für eine entsprechende Reduktion des Stickstoffmonoxids (NO) und des Stickstoffdioxids (NO₂) lauten folgendermaßen:

4 NO + O₂ + 4 NH₃ ↔ 4 N₂ + 6 H₂O

2 NO₂ + O₂ + 4 NH₃ ↔ 3 N₂ + 6 H₂O

Die in dem Rauchgas gespeicherte thermische Energie wird anschließend in dem Dampfkessel 14 dazu verwendet, Wasserdampf zu erzeugen. Zu diesem Zweck wird Speisewasser aus einer Speisewasseraufbereitung 16 über eine Speisewasserleitung 17 in den Dampfkessel 14 geführt. Der derart erzeugte Dampf wird aus dem Dampfkessel 14 über eine erste Dampfleitung 18 in einen Dampfgenerator 19 geleitet. Im Dampfgenerator 19 wird der Dampf zur Erzeugung elektrischer Energie eingesetzt. Der verbleibende Sattdampf wird über eine zweite Dampfleitung 20 zum Trockner 4 geleitet und dort zur Trocknung des Klärschlamms verwendet. Die in dem derart eingesetzten Sattdampf enthaltene Energie wird dabei einerseits in dem Klärschlamm und andererseits in den Trocknerbrüden gespeichert und somit innerhalb der Klärschlamm-Monoverbrennungsanlage freigesetzt.

Der Dampfgenerator 19 ist mit einem Wärmetauscher 21 zur Kühlung des Dampfgenerators 19 verbunden. Die in dem Dampfgenerator 19 erzeugte elektrische Energie wird über eine elektrische Leitung 22 aus der Klärschlamm-Monoverbrennungsanlage abgeführt. Die von dem Wärmetauscher 21 bereitgestellte thermische Energie wird über eine Wärmeleitung 23 zu einem Nahwärmenetz geführt.

Im Wärmetauscher 21 wird ein Teil des eingeführten Dampfs kondensiert. Das resultierende Kondensat wird über eine Kondensatleitung 24 zur Speisewasseraufbereitung 16 geführt und als Speisewasser für die weitere Dampferzeugung wieder eingesetzt. Auf diese Weise kann die Klärschlamm-Monoverbrennungsanlage praktisch abwasserfrei arbeiten. Lediglich ein geringer Teil Abwasser wird über eine Abwasserleitung 25 aus der Speisewasseraufbereitung 16 und damit aus der gesamten Klärschlamm-Monoverbrennungsanlage abgeführt.

Da die Speisewasseraufbereitung nicht nur durch Kondensat gespeist werden kann, ist sie zudem mit einer Frischwasserleitung 26 verbunden, über die Frischwasser in die Speisewasseraufbereitung 16 geführt wird.

Die Klärschlamm-Monoverbrennungsanlage weist zudem ein Betriebsstofflager 27 auf, in das verschiedene Betriebsstoffe wie ein Inhibitor 29, Aktivkohle 30 und ein Additiv 31 aus externen Quellen eingebracht werden.

Der Inhibitor 29 wird aus dem Betriebsstofflager 27 über eine Inhibitorleitung 33 zur Speisewasseraufbereitung 16 geführt. Der Inhibitor 29 hat dabei eine biozide Wirkung und verhindert ein Bakterien- und Algenwachstum innerhalb der Speisewasseraufbereitung 16 und des Speisewassers. Die Aktivkohle 30 wird über eine Aktivkohleleitung 34 zu einer Rauchgasreinigung 35 geführt. In gleicher Weise wird das Additiv 31 über eine Additivleitung 36 zur Rauchgasreinigung 35 geführt. Die Aktivkohle 30 und das Additiv 31 sorgen für eine trockene Rauchgasreinigung 35, in der Sauergase, Schwermetalle und organische Schadstoffe effizient abgetrennt werden. Zu diesem Zweck wird das Rauchgas, das in dem Dampfkessel 14 seine thermische Energie teilweise abgegeben hat, über eine zweite Rauchgasleitung 37 zur Rauchgasreinigung 35 geführt. Das in der Rauchgasreinigung 35 gereinigte Rauchgas wird über eine dritte Rauchgasleitung 38 zu einem Kamin 39 geleitet und gelangt über diesen Kamin 39 in die Umgebung.

Aus dem Dampfkessel 14 und der im Verbrennungsofen 9 aufrechterhaltenen Wirbelschicht stammende Kesselasche 40 wird in einem Lager für prozessbedingte Abfälle 41 zwischengelagert und kann dann bei Bedarf entsorgt werden. Zur Zwischenlagerung von Flugasche 43 aus der Rauchgasreinigung 35 ist regelmäßig eine separate Lagerung und Entsorgung notwendig.

Die in der Darstellung der Figur 1 gestrichelt umrandet dargestellten Elemente können auch als Betriebseinheiten oder Module der Klärschlamm-Monoverbrennungsanlage bezeichnet werden. So ist es möglich, die Klärschlamm-Monoverbrennungsanlage modular aufzubauen und dabei die einzelnen Betriebseinheiten bzw. Module wirkungstechnisch miteinander zu verbinden.

## Patentansprüche

1. Verfahren zur Verbrennung eines Klärschlamms, mit den folgenden Schritten:
a) Trocknen des Klärschlamms,
b) Verbrennen des Klärschlamms,
c) Einleiten von ammoniakhaltigen Brüden, die beim Trocknen des Klärschlamms entstehen, in Rauchgas, welches beim Verbrennen des Klärschlamms entsteht,
**dadurch gekennzeichnet,**
**dass** ein Trockensubstanzanteil des Klärschlamms beim Trocknen auf einen Wert zwischen 45 % und 80 % gebracht wird, dass der derart getrocknete Klärschlamm in einen Mischer überführt wird, in dem der getrocknete Klärschlamm mit nicht getrocknetem Klärschlamm vermischt wird, um einen definierten Trockensubstanzanteil des Klärschlamms von 45 % bis 60 % einzustellen, dass das Verbrennen des Klärschlamms autotherm als Wirbelschichtverbrennung in einem Verbrennungsaggregat erfolgt und dass die ammoniakhaltigen Brüden einerseits in das Rauchgas und andererseits zusätzlich in eine Wirbelschicht in dem Verbrennungsaggregat eingeleitet werden, um eine vollständige Verwertung der ammoniakhaltigen Brüden zu erreichen.

2. Verfahren nach Anspruch 1, **dadurch gekennzeichnet, dass** das Einleiten der ammoniakhaltigen Brüden in das Rauchgas bei einer Temperatur von 800 °C bis 900 °C erfolgt.

3. Verfahren nach einem der vorherigen Ansprüche, **dadurch gekennzeichnet, dass** zum Trocknen des Klärschlamms Dampf eingesetzt wird, der in einem Dampfkessel (14) durch das bei der Verbrennung des Klärschlamms entstehende Rauchgas erzeugt wird.

4. Verfahren nach einem der vorherigen Ansprüche, **dadurch gekennzeichnet, dass** die ammoniakhaltigen Brüden vor ihrer Einleitung in die Wirbelschicht und/oder in das Rauchgas vorgewärmt werden.

5. Verfahren nach Anspruch 4, **dadurch gekennzeichnet, dass** zum Vorwärmen der ammoniakhaltigen Brüden Dampf eingesetzt wird, der in einem Dampfkessel (14) durch das bei der Verbrennung des Klärschlamms entstehende Rauchgas erzeugt wird.

6. Verfahren nach einem der vorherigen Ansprüche, **dadurch gekennzeichnet, dass** eine Stickstoffkonzentration und/oder eine Ammoniakkonzentration im Rauchgas bestimmt wird, um einen ersten Anteil der ammoniakhaltigen Brüden, der der Wirbelschicht im Verbrennungsaggregat zugeführt wird, und einen zweiten Anteil der ammoniakhaltigen Brüden, der dem Rauchgas zugeführt wird, zu bestimmen.

7. Verfahren nach einem der vorherigen Ansprüche, **dadurch gekennzeichnet, dass** die Trocknung und die Verbrennung des Klärschlamms in einem engen räumlichen und funktionalen Zusammenhang stehen.

8. Verfahren nach einem der vorherigen Ansprüche, **dadurch gekennzeichnet, dass** die Trocknung und die Verbrennung des Klärschlamms in derselben Schlammverwertungsanlage erfolgen.

## Claims

1. Method for combustion of a sewage sludge, comprising the following steps:
a) drying the sewage sludge,
b) combusting the sewage sludge,
c) introducing ammonia-containing vapours formed during drying of the sewage sludge into flue gas formed during combustion of the sewage sludge,
**characterized in**
**that** the sewage sludge is brought during drying to a dry matter fraction of between 45% and 80%, that the sewage sludge thus dried is transferred into a mixer wherein the dried sewage sludge is mixed with undried sewage sludge so as to establish a defined dry matter fraction of 45% to 60% in the sewage sludge, that the combustion of the sewage sludge takes place autothermally as fluidized bed combustion in a combustion assembly, and that the ammonia-containing vapours are introduced on the one hand into the flue gas and on the other hand additionally into a fluidized bed in the combustion assembly so as to achieve complete utilization of the ammonia-containing vapours.

2. Method according to Claim 1, **characterized in that** the ammonia-containing vapours are introduced into the flue gas at a temperature of 800°C to 900°C.

3. Method according to either of the preceding claims, **characterized in that** the sewage sludge is dried using steam which is generated in a boiler (14) by the flue gas formed during combustion of the sewage sludge.

4. Method according to any of the preceding claims, **characterized in that** the ammonia-containing vapours are preheated before being introduced into the fluidized bed and/or into the flue gas.

5. Method according to Claim 4, **characterized in that** the ammonia-containing vapours are preheated using steam generated in a boiler (14) by the flue gas formed during combustion of the sewage sludge.

6. Method according to any of the preceding claims, **characterized in that** a nitrogen concentration and/or an ammonia concentration in the flue gas are/is determined in order to determine a first fraction of the ammonia-containing vapours, which is supplied to the fluidized bed in the combustion assembly, and a second fraction of the ammonia-containing vapours, which is supplied to the flue gas.

7. Method according to any of the preceding claims, **characterized in that** the drying and the combustion of the sewage sludge are in a narrow spatial and functional correlation.

8. Method according to any of the preceding claims, **characterized in that** the drying and the combustion of the sewage sludge take place in the same sludge utilization facility.

## Revendications

1. Procédé pour l'incinération de boues d'épuration, comportant les étapes suivantes :
a) séchage des boues d'épuration,
b) brûlage des boues d'épuration,
c) introduction des vapeurs contenant de l'ammoniac, qui sont formées lors du séchage des boues d'épuration, dans le gaz de combustion qui est produit lors de la combustion des boues d'épuration,
**caractérisé en ce que**
lors du séchage une proportion de matière sèche des boues d'épuration est amenée à une valeur comprise entre 45 % et 80 %, **en ce que** les boues d'épuration séchées de cette façon sont transférées dans un mélangeur, dans lequel on mélange les boues d'épuration séchées avec des boues d'épuration non séchées, afin d'ajuster une proportion définie de matière sèche des boues d'épuration de 45 % à 60 %, **en ce que** la combustion des boues d'épuration s'effectue en mode autothermique en tant que combustion en lit fluidisé dans un appareil d'incinération et **en ce qu'**on introduit les vapeurs contenant de l'ammoniac d'une part dans le gaz de combustion et d'autre part en outre dans un lit fluidisé dans l'appareil d'incinération, afin de parvenir à une utilisation complète des vapeurs contenant de l'ammoniac.

2. Procédé selon la revendication 1, **caractérisé en ce que** l'introduction des vapeurs contenant de l'ammoniac dans le gaz de combustion s'effectue à une température de 800 °C à 900 °C.

3. Procédé selon l'une quelconque des revendications précédentes, **caractérisé en ce que** pour le séchage des boues d'épuration on utilise de la vapeur qui est produite, dans une chaudière à vapeur (14), par le gaz de combustion produit lors de la combustion des boues d'épuration.

4. Procédé selon l'une quelconque des revendications précédentes, **caractérisé en ce que** les vapeurs contenant de l'ammoniac sont préchauffées avant leur introduction dans le lit fluidisé et/ou dans le gaz de combustion.

5. Procédé selon la revendication 4, **caractérisé en ce que** pour le préchauffage des vapeurs contenant de l'ammoniac on utilise de la vapeur qui est produite, dans une chaudière à vapeur (14), par le gaz de combustion produit lors de la combustion des boues d'épuration.

6. Procédé selon l'une quelconque des revendications précédentes, **caractérisé en ce qu'**on détermine une concentration d'azote et/ou une concentration d'ammoniac dans le gaz de combustion, afin de déterminer une première proportion des vapeurs contenant de l'ammoniac, qui est envoyée au lit fluidisé dans l'appareil d'incinération, et une seconde proportion des vapeurs contenant de l'ammoniac, qui est envoyée au gaz de combustion.

7. Procédé selon l'une quelconque des revendications précédentes, **caractérisé en ce que** le séchage et le brûlage des boues d'épuration sont en une étroite relation spatiale et fonctionnelle.

8. Procédé selon l'une quelconque des revendications précédentes, **caractérisé en ce que** le séchage et le brûlage des boues d'épuration s'effectuent dans le même appareil d'utilisation des boues.
